# EUROPÄISCHE PATENTSCHRIFT

(11) **EP 0 378 877 B1**
(45) Veröffentlichungstag und Bekanntmachung des Hinweises auf die Patenterteilung: **16.06.1993**
(21) Anmeldenummer: 89203196.4
(22) Anmeldetag: 14.12.1989
(51) Int. Cl.: C22B 1/20

(54) **Verfahren zur Verringerung der Emission von SOx im Abgas von Sinteranlagen**
Process for reducing the SOx-emissions in the waste gas of sinter plants
Procédé pour la réduction d'émissions de SOx dans les gaz d'échappement d'installations de frittage

(30) Priorität: 24.12.1988 DE 3843929
(43) Veröffentlichungstag der Anmeldung: 25.07.1990
(73) Patentinhaber: METALLGESELLSCHAFT Aktiengesellschaft, 60015 Frankfurt (DE)
(72) Erfinder: Magedanz, Norbert, Dr., D-6567 Hasselroth 1 (DE); Schmidt, Hermann, D-6368 Bad Vilbel (DE)

(56) Entgegenhaltungen:
- EP-A- 0 039 305
- FR-A- 2 444 720
- SOVIET INVENTIONS ILLUSTRATED, Derwent Publ. Ltd., Sec. Chem., week C24, 23 July 1980; Nr. 42926 C24; & SU-A-692875

## Beschreibung

Die Erfindung betrifft ein Verfahren zur Verringerung der Emission von SOx im Abgas von Sinteranlagen, bei denen eine Mischung aus eisenoxydhaltigen Materialien und festem Brennstoff auf einen Wanderrost chargiert wird, die Mischung an der Oberfläche gezündet und durch Hindurchsaugen von sauerstoffhaltigen Gasen gesintert wird, wobei der SOx-Gehalt des Abgases des Wanderrostes durch Aufgabe von SOx-bindenden Stoffen auf den Wanderrost verringert wird.

Das Sintern auf einem Wanderrost erfolgt in der Weise, daß eine Mischung aus eisenoxydhaltigen Materialien, Rückgut, festem Brennstoff und ggf. Zuschlagstoffen am Anfang des Wanderrostes aufgegeben wird. Das Beschickungsbett wird an der Oberfläche gezündet und mit Hilfe von durch das Beschickungsbett gesaugten sauerstoffhaltigen Gasen gesintert. Als Brennstoff werden Koksgrus oder Feinkohle eingesetzt. Der Sinterkuchen wird entweder heiß abgeworfen oder in einer an die Sinterzone angeschlossenen Kühlzone auf dem Wanderrost gekühlt und anschließend kalt abgeworfen. Das beim Sintern anfallende Abgas enthält gewisse Mengen an SOx, die hauptsächlich bei der Verbrennung des festen, kohlenstoffhaltigen Materials entstehen. Der Grenzwert bzgl. der SOx-Emission bei Sinteranlagen liegt derzeit bei 500 mg SOx/Nm3.

Es sind verschiedene Verfahren bekannt, bei welchen die beim Sintern anfallenden SOx-Verbindungen chemisch gebunden werden.

Dies kann z. B. durch eine Gaswäsche geschehen. Das Gaswaschverfahren hat den Nachteil, daß bei der Wäsche ein mit Schadstoffen beladenes Abwasser anfällt, welches in einer zusätzlichen Reinigungsstufe aufbereitet werden muß.

Aus der SU-PS 692 875 ist bekannt, eine Zwischenschicht von Kalkstein mit einer Korngröße von 1 bis 5 mm zwischen Rostbelag und Sinterschicht einzubringen, um die SOx-Verbindungen zu binden. In der DE-PS 30 164 96 wird ein Verfahren beschrieben, bei welchem anstelle des normalen Rostbelages oder zusätzlich zum normalen Rostbelag, der üblicherweise in einer Stärke von 2 bis 3 cm auf die Roststäbe des Sinterbandes aufgebracht wird und die Stäbe vor thermischer Überlastung schützen sowie das Durchrieseln der Mischungskomponenten verhindern soll, stückige, bereits hochofengerechte Möllerstoffe wie Pellets, Stückerze, LD-Schlacke und fertiger Sinter in wesentlich größerer Schichtdicke auf den Wanderrost geschichtet werden. Vor der Aufgabe auf den Wanderrost wird dieser Rostbelag mit einer basischen Aufschlämmung oder Flüssigkeit getränkt bzw. besprüht, die den SOx-Gehalt binden soll.

Diese Verfahren weisen erhebliche Nachteile auf. Sie sind aufwendig, da zusätzlich zu der Sintermischung größere Massen bzw. Volumina auf den Wanderrost chargiert werden müssen. Das Einbringen von Kalkstein als Zwischenschicht ist unwirtschaftlich, da die SOx-Verbindungen hauptsächlich an der Oberfläche der Kalksteinstücke gebunden werden, so daß bezogen auf den chemischen Formelumsatz ein großer Überschuß an Kalkstein auf den Wanderrost aufgegeben werden muß.

Der Erfindung liegt die Aufgabe zugrunde, ein Verfahren zur Reduzierung der SOx-Emissionen bei Sinterprozessen zu entwickeln, bei welchem die oben beschriebenen Nachteile nicht auftreten und insbesondere die Volumenvergrößerung der Beschickung durch den Zusatz der SOx bindenden Stoffe möglichst gering gehalten wird.

Erfindungsgemäß wird die Aufgabe gemäß Anspruch 1 dadurch gelöst, daß ein Teilstrom des Abgases mit einem großen Anteil des gesamten SOx-Anfalls getrennt abgezogen und im Schlußteil des Wanderrostes erneut durch die Beschickung geleitet wird, und daß vor oder in der Rückführzone des Teilstromes Oxide oder Hydroxide oder Karbonate der Erdalkali- oder Alkalimetalle auf die Beschickung aufgegeben werden. Als eisenoxydhaltige Materialien werden hauptsächlich Eisenerze eingesetzt. Als SOx-bindende Stoffe kommen hauptsächlich die genannten Verbindungen von Ca, Mg, Na, K, insbesondere die kalkhaltigen Verbindungen wie CaOH2, CaO und CaCO3 in Frage. Sie können als Lösung, Suspension oder Pulver auf die Beschickung aufgegeben werden. Die Korngröße des Pulvers sollte unter 1 mm, vorzugsweise unter 0,1 mm liegen. Die Stoffe können einzeln oder als Mischung eingesetzt werden. Es können auch Abfallstoffe eingesetzt werden, welche die obengenannten Materialien enthalten. Im allgemeinen wird mit Ausnahme des rückgeführten Teilstromes als sauerstoffhaltiges Gas, das durch die Beschickung gesaugt wird, Luft gewählt. Falls der Sauerstoffgehalt des rückgeführten Teilstromes für die Sinterung nicht ausreichend ist, kann dem Teilstrom Sauerstoff zugesetzt werden. Als Schlußteil des Wanderrostes ist bei einem Wanderrost ohne anschließende Kühlzone der letzte Teil der Sinterzone zu verstehen. Die Rückführzone kann sich - in Laufrichtung gesehen - bis zum Ende des letzten Windkastens oder bis zu einer Stelle über dem letzten oder vorletzten Windkasten erstrecken. Ist hinter der Sinterzone des Wanderrostes eine Kühlzone angeordnet, so ist als Schlußteil des Wanderrostes diese Kühlzone anzusehen. Die Rückführzone wird - in Laufrichtung gesehen - im ersten Teil der Kühlzone angeordnet. Der SOx-Anfall ist über die Länge des Sinterbandes unterschiedlich und weist an einer bestimmten Stelle ein Maximum auf. Die Lage des Maximums ist von den jeweiligen Betriebsbedingungen abhängig, und kann empirisch ermittelt werden. Das Absaugen des Teilstromes des Abgases hat so zu erfolgen, daß einerseits die Lage und Länge der Absaugzone so gewählt wird, daß möglichst viel von dem beim Sintern anfallenden SOx erfaßt wird, andererseits das SOx in einem solchen Volumenstrom anfällt, der in der Rückführzone im Schlußteil des Wanderrostes erneut durch die Beschickung geleitet werden kann. Im allgemeinen liegt die Absaugzone in der Mitte der Sinterstrecke, meist geringfügig zum Abwurfende hin verschoben. Der Teilstrom des Abgases muß einen großen Anteil des gesamten SOx-Anfalls umfassen, d.h., es muß eine so große Menge der SOx-Verbindungen erfaßt werden, daß die vorgeschriebenen Grenzwerte der Entschwefelung des gesamten Abgases unterschritten werden. Die Windkästen, aus denen der Teilstrom des Abgases abgesaugt wird, werden an eine Rückführleitung angeschlossen, die in eine Gashaube über der Rückführzone mündet. Der Teilstrom kann durch eine Entstaubungsvorrichtung geleitet werden. Vorzugsweise werden auch einige Windkästen vor oder hinter dieser Absaugzone konstruktiv so gestaltet, daß sie bei Bedarf sowohl an die Gassammelleitung als auch an die Rückführleitung angeschlossen werden können. Die Lage der Absaugzone kann somit einer Verschiebung des Maximums des SOx-Anfalls, welche von den jeweiligen Betriebsbedingungen abhängig ist, angepaßt werden. Falls auch eine Änderung des Volumens des abgesaugten Teilstromes vorgesehen werden soll, wird die Länge der Gashaube so ausgelegt, daß auch das maximale rückgeführte Volumen des Teilstromes durch die Gashaube geleitet werden kann. Im Normalfall wird ein Teil der Gashaube nicht mit dem rückgeführten Teilstrom des Abgases, sondern mit Luft beaufschlagt. Bei einer Vergrößerung des Teilstromes wird ein entsprechender Teil der Gashaube, der im Normalfall mit Luft beaufschlagt wird, an die Rückführleitung angeschlossen.

Eine vorzugsweise Ausgestaltung der Erfindung besteht darin, daß 15 bis 30 % der Länge der aktiven Sinterfläche des Wanderrostes, deren Lage von dem lokalen SOx-Anfall abhängig ist, beim Abziehen des Teilstromes des Abgases umfaßt werden. Als aktive Sinterfläche des Wanderrostes ist diejenige Wanderrostfläche des Obertrums zu verstehen, unterhalb derer sich die Windkästen befinden, in die sauerstoffhaltige Gase durch die Sintermischung gesaugt werden. Dadurch kann in einer relativ kleinen Gasmenge, eine relativ große Menge des SOx-Anfalls erfaßt und in die Rückführzone rückgeführt werden.

Gemäß einer weiteren bevorzugten Ausgestaltung der Erfindung umfaßt der abgezogene Teilstrom des Abgases mindestens 50 % des gesamten SOx-Anfalls. Dadurch wird ein guter Reinigungseffekt in einer relativ kleinen Gasmenge erzielt.

Eine Ausgestaltung der Erfindung besteht darin, daß sich bei einem Wanderrost mit anschließender Kühlzone die Rückführzone des Teilstromes des Abgases von einer Stelle innerhalb der Kühlzone ausgehend soweit in Richtung der Materialaufgabe erstreckt, daß die in der Rückführzone abgesaugte Gasmenge mindestens der Menge des in die Rückführzone rückgeführten Teilstromes des Abgases entspricht. Dabei ist die Rückführzone im ersten Teil der Kühlzone, die sich an die Sinterzone anschließt, angeordnet, wodurch eine Kühlung entsprechend der Temperatur des rückgeführten Teilstromes erfolgt. Im zweiten Teil der Kühlzone wird kalte Luft durch das Sinterbett gesaugt und weitergekühlt. Dadurch ist sichergestellt, daß die rückgeführte Gasmenge auf jeden Fall erneut durch die Beschickung geleitet werden kann und kein rückgeführtes Abgas aus der Gashaube in die Atmosphäre austreten kann. Außerdem wird das Sinterergebnis nicht durch den Sauerstoffgehalt des rückgeführten Teilstromes beeinflußt.

Eine Ausgestaltung besteht darin, daß sich bei einem Wanderrost ohne anschließender Kühlzone die Rückführzone des Teilstromes des Abgases vom Ende des Wanderrostes soweit in Richtung Materialaufgabe erstreckt, daß die in der Rückführzone abgesaugte Gasmenge mindestens der Menge des in die Rückführzone rückgeführten Teilstromes des Abgases entspricht. Dadurch ist gewährleistet, daß die rückgeführte Gasmenge auf jeden Fall erneut durch die Beschickung geleitet werden kann und kein rückgeführtes Abgas aus der Gashaube in die Atmosphäre austreten kann.

Gemäß einer weiteren bevorzugten Ausgestaltung der Erfindung wird kalkhaltiges Material als Lösung oder Pulver auf die Beschickung aufgegeben. Unter dem Ausdruck Lösung ist eine Aufschlämmung im wässrigen Medium zu verstehen. Unter dem Ausdruck Pulver sind Pulverteilchen zu verstehen, bei denen die Korngröße unter 1 mm, vorzugsweise unter 0,1 mm, liegt. Dadurch erreicht man eine gute Verteilung des kalkhaltigen Materials. Dies hat zur Folge, daß ein großer Anteil des kalkhaltigen Materials mit den SOx-Verbindungen reagiert, so daß nur ein geringer stöchiometrischer Überschuß an kalkhaltigem Material benötigt wird, um die zu eliminierenden Mengen an SOx-Verbindungen aus dem Teilstrom des Abgases zu entfernen.

Nach einer weiteren bevorzugten Ausgestaltung der Erfindung werden als kalkhaltiges Material CaO oder eine Ca(OH)2-Lösung eingesetzt. Werden 10 bis 25%ige Ca(OH)2-Lösungen verwendet, ist einerseits eine gute Fördermöglichkeit und Verteilung des kalkhaltigen Materials gegeben, andererseits die erforderliche Menge an Wasser relativ gering, so daß die Sinterleistung nicht wesentlich beeinflußt wird. CaO und Ca(OH)2 haben eine gute Reaktivität bzgl. der SOx-Verbindungen. Sie stellen billige Reagenzien dar, welche zur Einstellung der Basizität der Sintermischung verwendet werden können.

Der Gegenstand der Erfindung wird nachfolgend anhand von Zeichnungen näher erläutert.

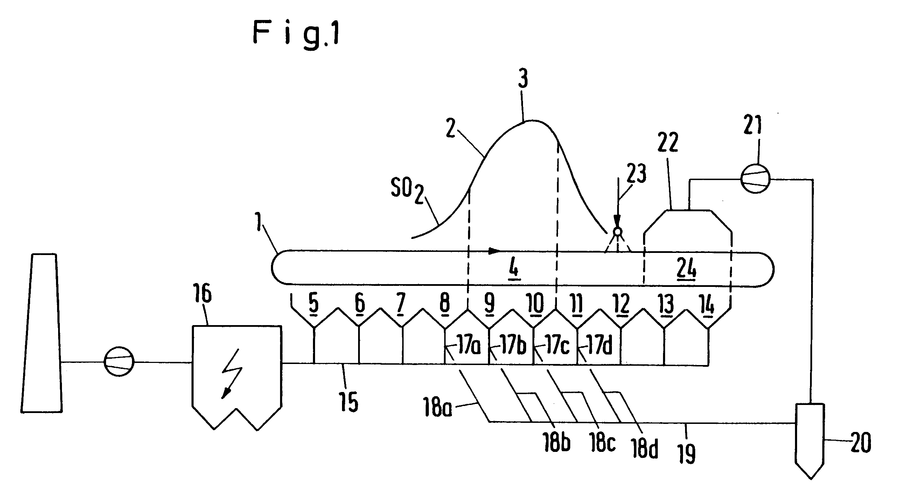

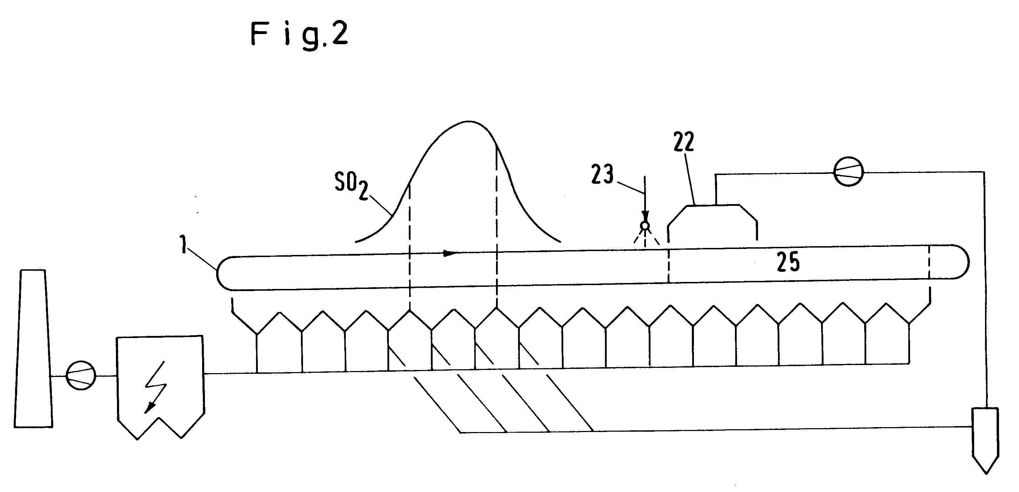

Fig. 1 zeigt eine schematische Darstellung eines Sinterbandes ohne Kühlzone. Fig. 2 zeige eine schematische Darstellung eines Sinterbandes mit Kühlzone.

In Fig. 1 ist ein Sinterband (1) ohne anschließende Kühlzone mit den unter dem Untertrum des Sinterbandes angeordneten Windkästen (5) bis (14) schematisch dargestellt, wobei aus Übersichtsgründen auf Einzelheiten verzichtet wurde. Über dem Obertrum des Sinterbandes ist der lokale SOx-Anfall in Form einer Kurve (2) über der Sinterbandlänge mit dem Maximum (3) aufgetragen. Alle Windkästen sind an eine Gassammelleitung (15) angeschlossen, die in eine Entstaubungsvorrichtung (16) mündet. In der Absaugzone (4), welche die aktive Sinterfläche über den Windkästen (9) und (10) umfaßt, wird ein Teilstrom des Abgases, der nach Aussage des Kurvenverlaufs der Kurve (2) einen großen Anteil des SOx-Anfalls enthält, abgesaugt. Die Absperrvorrichtungen (17b) und (17c) werden so geschaltet, daß der in der Absaugzone (4) erfaßte Teilstrom des Abgases über die Leitungen (18b) und (18c) in eine Rückführleitung (19) gelangt. In einer Entstaubungsvorrichtung (20) wird der Teilstrom des Abgases entstaubt. Im Anschluß an die Entstaubung wird der Teilstrom über das Gebläse (21) in die Gashaube (22) geleitet. Die Aufgabe des SOx-bindenden Materials erfolgt mit einer Sprühvorrichtung (23), die über dem Windkasten (12) oberhalb der Sinterfläche angeordnet ist. In der Rückführzone (24) wird der Teilstrom des Abgases erneut durch die Beschickung geleitet. Dabei werden die SOx-Verbindungen, welche im Teilstrom des Abgases enthalten sind, an dem SOx-bindenden Material chemisch gebunden. Es entsteht CaSO4, welches im sich nach dem Sintern anschließenden Hochofenprozeß verschlackt wird. Anschließend gelangt der Teilstrom des Abgases über die Windkästen (13) und (14) in die Gassammelleitung (15). Durch die Absperrvorrichtungen (17a) und (17d) lassen sich auch die Windkästen (8) und (11) über die Leitungen (18a) und (18d) mit der Rückführleitung (19) verbinden. Die Lage der Absaugzone (4), die in diesem Beispiel eine Sinterfläche über zwei Windkästen umfaßt, kann somit verschoben werden. Je nach der von Betriebsbedingungen abhängigen Lage des Maximums (3), kann dann die Absaugzone auch die Windkästen (8) und (9) oder (10) und (11) umfassen.

Fig. 2 unterscheidet sich von Fig. 1 dadurch, daß Fig. 2 ein Sinterband (1) mit anschließender Kühlzone (25) vorsieht. Das SOx-bindende Material wird vor der Kühlzone (25), über welcher die Gashaube (22) angeordnet ist, auf die Beschickung aufgegeben (23).

Das erfindungsgemäße Verfahren wird anhand des nachfolgenden Ausführungsbeispiels näher erläutert.

### Beispiel

Ein Sinterband ohne anschließende Kühlzone wurde mit folgenden Betriebswerten gefahren:
Sintererzeugungen: 575 t/h
Abgasmenge: 1 408 000 Nm3/h
Geschwindigkeit des Wanderrostes: 3,2 m/min.
Schichthöhe der Sintermischung: 581 mm
Sinterstreckenlänge: 100 m

Unter dem Untertrum des Sinterbandes waren 25 Windkästen angeordnet. Die prozentuale SOx-Verteilung in Prozent der Gesamtmenge an SOx pro Windkasten und die Abgasverteilung in Prozent der Gesamtmenge an Abgas pro Windkasten wurden gemessen. Die Meßergebnisse sind in Tabelle 1 aufgeführt. Dabei sind die Windkästen vom Anfang der Sinterstrecke beginnend bis zum Ende der Sinterstrecke fortlaufend nummeriert.

**Tabelle 1**

| Windkasten | SOx-Verteilung in % der Gesamtmenge pro Windkasten | Abgasverteilung in % der Gesamtmenge pro Windkasten |
|---|---|---|
| 1 | 0,03 | 3,38 |
| 2 | 0,06 | 3,80 |
| 3 | 0,12 | 4,22 |
| 4 | 0,21 | 4,33 |
| 5 | 0,36 | 4,33 |
| 6 | 0,55 | 4,28 |
| 7 | 0,88 | 4,27 |
| 8 | 1,37 | 4,27 |
| 9 | 2,49 | 4,23 |
| 10 | 4,07 | 4,22 |
| 11 | 5,69 | 4,22 |
| 12 | 7,42 | 4,16 |
| 13 | 9,24 | 4,04 |
| 14 | 10,09 | 3,92 |
| 15 | 10,40 | 3,62 |
| 16 | 10,52 | 3,44 |
| 17 | 9,49 | 3,27 |
| 18 | 7,54 | 3,15 |
| 19 | 5,08 | 3,21 |
| 20 | 4,50 | 3,38 |
| 21 | 3,95 | 3,68 |
| 22 | 2,55 | 3,92 |
| 23 | 1,82 | 4,39 |
| 24 | 1,09 | 4,87 |
| 25 | 0,48 | 5,40 |

Als Absaugzone wurde der Teil der aktiven Sinterfläche des Wanderrostes gewählt, welcher sich über den Windkästen 13 bis 18 befindet. Der Tabelle 1 ist zu entnehmen, daß der durch diese Absaugzone hindurchgesaugte Teilstrom des Abgases 57,3 % des gesamten SOx-Anfalls enthält. Bezogen auf die gesamte Abgasmenge, die bei dem Sinterprozeß anfällt, wird aber nur eine geringe Abgasmenge als Teilstrom abgesaugt. Aus Tabelle 1 ist zu entnehmen, daß der Teilstrom des Abgases nur 21,4 % der gesamten Abgasmenge umfaßt. Über dem Obertrum, unter dem sich der Windkasten 19 befindet, ist die Sprühvorrichtung für das kalkhaltige Material angeordnet. Als kalkhaltiges Material wird eine 15 %ige Kalkmilch, bestehend aus Ca(OH)2 und Wasser, gewählt. Über einem Teil des Windkastens 19 und den Windkästen 20 bis 24 ist eine Gashaube angeordnet, in die der Teilstrom des Abgases zurückgeführt wird.

Für die Entschwefelung wurden folgende Vorgaben beachtet:
1. Der SOx-Gehalt im Abgas beträgt 800 mg SOx/Nm3.
2. Der maximal zulässige SOx-Gehalt im Abgas soll 400 mg SOx/Nm3 betragen.
3. Der Wirkungsgrad der Entschwefelung beträgt 90 %.

Der SO2-Durchsatz im Teilstrom des Abgases beträgt 645,4 kg/h. Von der 15 %igen Kalkmilch, welche eine mittlere Dichte von 1090 kg/m3 aufweist, werden 6,2 m3/h aufgesprüht, wobei unter Berücksichtigung des Wirkungsgrades der Entschwefelung von 90 % mit einem Überschuß von 50 % an Ca(OH)2, bezogen auf die stöchiometrisch erforderliche Menge an Ca(OH)2, gearbeitet wurde. Eine Messung des SOx-Gehaltes im Reingas ergab einen Wert, der unter 400 mg/Nm3 liegt.

Die Vorteile der Erfindung bestehen darin, daß zwischen der Aufgabestelle des zu sinternden Gutes bis zu der Stelle der Rückführzone, an welcher das SOx-bindende Material auf die Beschickung aufgegeben wird, nur die Sintermischung vom Wanderrost transportiert und gesintert wird. Das Absaugen eines Teilstroms des Abgases und die Rückführung ist ohne großen Aufwand realisierbar. Ältere Anlagen können problemlos nachgerüstet werden. Es ist nur ein relativ geringer Überschuß an SOx-bindenden Material erforderlich.

Obwohl nur ein kleiner Teilstrom des Abgases behandelt wird und der technische Aufwand gering ist, gelingt es, den Gehalt an SOx-Verbindungen im Abgas von Sinteranlagen soweit zu senken, daß vorgeschriebene Grenzwerte deutlich unterschritten werden.

## Patentansprüche

1. Verfahren zur Verringerung der Emission von SOₓ im Abgas von Sinteranlagen, bei dem eine Mischung aus eisenoxidhaltigen Materialien und festem Brennstoff als Beschickung auf einen Wanderrost chargiert wird, die Beschickung an der Oberfläche gezündet und durch Hindurchsaugen von sauerstoffhaltigen Gasen gesintert wird, wobei der SOₓ-Gehalt des Abgases des Wanderrostes durch Aufgabe von SOₓ-bindenden Stoffen auf den Wanderrost verringert wird, dadurch gekennzeichnet, daß ein Teilstrom des Abgases, der einen so großen Anteil des gesamten SOₓ-Anfalls enthält, daß bei der nachfolgenden Entschwefelung die vorgeschriebenen Grenzwerte für den SOₓ-Gehalt des gesamten Abgases unterschritten werden, getrennt aus einem Bereich des Wanderrostes abgezogen wird, wo der SOₓ-Gehalt im Abgas die höchsten Werte aufweist, dieser Teilstrom in einer Rückführzone im Schlußteil des Wanderrostes erneut durch die Beschickung geleitet wird, und daß vor oder in der Rückführzone des Teilstroms zur Bindung von SOₓ aus dem Teilstrom Oxide oder Hydroxide oder Carbonate der Erdalkali- oder Alkalimetalle auf die Oberfläche der Beschickung aufgegeben werden.

2. Verfahren nach Anspruch 1, dadurch gekennzeichnet, daß 15 bis 30 % der Länge der aktiven Sinterfläche des Wanderrostes, deren Lage von dem lokalen SOx-Anfall abhängig ist, beim Abziehen des Teilstromes des Abgases umfaßt werden.

3. Verfahren nach Anspruch 1 oder 2, dadurch gekennzeichnet, daß der abgezogene Teilstrom des Abgases mindestens 50 % des gesamten SOx-Anfalls enthält.

4. Verfahren nach einem der Ansprüche 1 bis 3, dadurch gekennzeichnet, daß sich bei einem Wanderrost mit anschließender Kühlzone die Rückführzone des Teilstromes des Abgases von einer Stelle innerhalb der Kühlzone ausgehend soweit in Richtung der Materialaufgabe erstreckt, daß die in der Rückführzone abgesaugte Gasmenge mindestens der Menge des in die Rückführzone rückgeführten Teilstromes des Abgases entspricht.

5. Verfahren nach einem der Ansprüche 1 bis 3, dadurch gekennzeichnet, daß sich bei einem Wanderrost ohne anschließende Kühlzone die Rückführzone des Teilstromes des Abgases vom Ende des Wanderrostes soweit in Richtung Materialaufgabe erstreckt, daß die in der Rückführzone abgesaugte Gasmenge mindestens der Menge des in die Rückführzone rückgeführten Teilstromes des Abgases entspricht.

6. Verfahren nach einem der Ansprüche 1 bis 5, dadurch gekennzeichnet, daß kalkhaltiges Material als Lösung oder Pulver auf die Beschickung aufgegeben wird.

7. Verfahren nach Anspruch 6, dadurch gekennzeichnet, daß als kalkhaltiges Material CaO oder eine Ca(OH)2-Lösung eingesetzt werden.

## Claims

1. A process of decreasing the emission of SOx in the exhaust gas from sintering plants in which a mixture of materials which contain iron oxide and solid fuel is charged onto a traveling grate and the mixture is ignited on its surface and is sintered in that oxygen-containing gases are sucked through the mixture, wherein the SOx content of the exhaust gas from the traveling grate is decreased in that SOₓ-binding substances are delivered onto the traveling grate, characterized in that a partial stream of the exhaust gas, which partial stream contains such a large part of the entire SOx which is formed that in the subsequent desulfurization the SOₓ content of the entire exhaust gas falls below the prescribed limiting values, is separately withdrawn from the travelling grate from a zone in which the exhaust gas contains the highest values of SOₓ, which partial stream is passed again through the charge in the final portion of the traveling grate, and oxides or hydroxides or carbonates of alkaline earth metals or alkali metals are delivered onto the charge before or in the zone for receiving the recycled partial stream for binding SOₓ to remove it from the partial stream.

2. A process according to claim 1, characterized in that the partial stream of exhaust gas is withdrawn from the traveling grate in an area which occupies 15 to 30 % of the length of the active sintering area of the traveling grate in a range that is selected in dependence on the local formation of SOx.

3. A process according to claim 1 or 2, characterized in that the partial exhaust gas stream which is withdrawn contains at least 50 % of the entire SOx which is formed.

4. A process according to any of claims 1 to 3, characterized in that a traveling grate is used on which the sintering zone is succeeded by a cooling zone and the zone for receiving the recycled partial stream of exhaust gas extends from a point within the colling zone toward the charging point to such an extent that the gas is sucked off from the zone for receiving the recycled gas at a rate which is at least as large as the rate at which the partial stream of exhaust gas is recycled to the zone for receiving the recycled gas.

5. A process according to claim 1 to 3, characterized in that the sintering zone of the traveling grate is not succeded by a cooling zone and that the zone for receiving the recycled partial stream of exhaust gas extends from the discharge end of the traveling grate toward the charging point to such an extent that the rate at which gas is sucked from the zone for receiving the recycled gas is at least as high as the rate at which the partial stream of exhaust gas is recycled to said receiving zone.

6. A process according to any of claims 1 to 5, characterized in that a lime-containing material is delivered as a solution or powder into the charge.

7. A process according to claim 6, characterized in that CaO or a solution of Ca(OH)2 is employed as a lime-containing material.

## Revendications

1. Procédé pour diminuer les émissions de SOₓ dans l'effluent gazeux d'installations d'agglomération, dans lequel on place sur une grille mécanique, pour servir de charge, un mélange de matériaux contenant des oxydes de fer et d'un combustible solide, on enflamme la charge en surface et on procède à une agglomération en aspirant des gaz oxygénés à travers la charge, la teneur de l'effluent de la grille mécanique en SOₓ étant diminuée par la mise en place, sur la grille mécanique, de substances fixant les SOₓ, caractérisé en ce qu'on soutire séparément, d'une zone de la grille mécanique où la teneur de l'effluent gazeux en SOₓ présente ses valeurs maximales, un courant partiel de l'effluent gazeux, qui contient une part de la totalité des SOₓ produits suffisante pour que, lors de la désulfuration ultérieure, la teneur de la totalité de l'effluent gazeux en SOₓ passe en-dessous des valeurs limites prescrites, ce courant partiel étant de nouveau envoyé à travers la charge dans une zone de recyclage se trouvant dans la partie terminale de la grille mécanique, et en ce que, avant ou dans la zone de recyclage du courant partiel, et pour fixer les SOₓ provenant du courant partiel, on place sur la surface de la charge des oxydes ou des hydroxydes ou des carbonates de métaux alcalins ou alcalino-terreux.

2. Procédé selon la revendication 1, caractérisé en ce que le soutirage du courant partiel de l'effluent gazeux porte sur 15 à 30 % de la longueur de la surface d'agglomération active de la grille mécanique, dont la position dépend de la production locale de SOₓ.

3. Procédé selon la revendication 1 ou 2, caractérisé en ce que le courant partiel soutiré de l'effluent gazeux contient au moins 50 % de la production totale de SOₓ.

4. Procédé selon l'une des revendications 1 à 3, caractérisé en ce que, dans le cas d'une grille mécanique suivie d'une zone de refroidissement, la zone de recyclage du courant partiel de l'effluent gazeux s'étend, à partir d'un point situé à l'intérieur de la zone de refroidissement, suffisamment, dans la direction de la mise en place du matériau, pour que la quantité de gaz aspirée dans la zone de recyclage corresponde au moins à la quantité du courant partiel de l'effluent gazeux recyclée dans la zone de recyclage.

5. Procédé selon l'une des revendications 1 à 3, caractérisé en ce que, dans le cas d'une grille mécanique non suivie d'une zone de refroidissement, la zone de recyclage du courant partiel de l'effluent gazeux s'étend, à partir d'un point situé à l'intérieur de la zone de refroidissement, suffisamment, dans la direction de la mise en place du matériau, pour que la quantité de gaz aspirée dans la zone de recyclage corresponde au moins à la quantité du courant partiel de l'effluent gazeux recyclée dans la zone de recyclage.

6. Procédé selon l'une des revendications 1 à 5, caractérisé en ce que la matière contenant de la chaux est placée sur la charge sous forme d'une solution ou d'une poudre.

7. Procédé selon la revendication 6, caractérisé en ce qu'on utilise comme matière contenant de la chaux du CaO ou une solution de Ca(OH)₂.
